# EUROPEAN PATENT APPLICATION

(11) **EP 2 551 573 A1**
(43) Date of publication of application: **30.01.2013**
(21) Application number: 12175601.9
(22) Date of filing: 09.07.2012
(51) Int. Cl.: F16L 5/02, F16L 27/04, F16L 27/08, F16L 27/12

(54) **Pipe connector**

(30) Priority: 29.07.2011 GB 201113057
(71) Applicant: AIRBUS OPERATIONS LIMITED, Filton Bristol Bristol BS99 7AR (GB)
(72) Inventor: Petit, David P S, BRISTOL, BRISTOL BS99 7AR (GB); Hafiz, Rizal, BRISTOL, BRISTOL BS99 7AR (GB)
(74) Representative: Scott, Alistair Francis

(57) **Abstract**

A pipe connector (100) providing a pivotable fluidic coupling. The pipe connector (100) comprises a male pipe connector (110) comprising a first pipe connector part for a first pipe at one end and a ball portion at the other end providing a substantially spherical outer surface portion; a female pipe connector (120) comprising a second pipe connector part for a second pipe at one end and a socket portion at the other end providing a substantially spherical inner surface portion and a substantially spherical outer surface portion; and a housing (140A, 140B)comprising a substantially spherical inner surface portion, wherein said outer surface portion of said female pipe connector (120) is engaged with said substantially spherical inner surface portion and pivotable relative to said housing (140A, 140B) and said outer surface portion of said male pipe connector (110) is engaged with and pivotable relative to said substantially spherical inner surface portion of said female pipe connector (120).

## Description

### Field of the Invention

The invention relates to a pipe connector and more particularly to a pipe connector providing a pivotable fluidic coupling.

### Background of the Invention

Operation of a typical aircraft requires transportation of various fluids to and from different locations within the aircraft. For example, a typical aircraft will include a fuel system for transportation of fuel from one or more aircraft fuel tanks to one or more engines. It is also common to include a venting system, which provides atmospheric venting to one or more of the fuel tanks. This prevents the occurrence of undesirable pressure differentials within the aircraft fuel tanks and fuel system during refuelling, ascent and descent of the aircraft.

The aircraft fuel and venting systems comprise one or more fuel lines and/or vent lines for transporting fuel and air respectively. In both cases, the line will typically comprise a plurality of pipe sections, which are connected by one or more connectors. The pipe sections are typically routed through one or more structural members of the aircraft wing or fuselage, and as a consequence each pair of adjacent pipe sections requires a specifically designed connector providing the correct angles for alignment of adjacent pipe sections. Therefore, a single fuel or vent line will often comprise a large number of different pipe connectors, thereby contributing to increased manufacturing complexity and overall aircraft cost. Moreover, assembly and fitting of the pipe sections requires an operator to select the correct pipe sections and corresponding connectors, thus increasing assembly time.

### Summary of the Invention

A first embodiment of the invention provides a pipe connector for providing a fluidic coupling between two pipes, the pipe connector comprising:
a male pipe connector comprising a first pipe connector part for a first pipe at one end and a ball portion at the other end providing a substantially spherical outer surface portion;
a female pipe connector comprising a second pipe connector part for a second pipe at one end and a socket portion at the other end providing a substantially spherical inner surface portion and a substantially spherical outer surface portion; and a housing comprising a substantially spherical inner surface portion, wherein the outer surface portion of the female pipe connector is engaged with the substantially spherical inner surface portion and pivotable relative to the housing and the outer surface portion of the male pipe connector is engaged with and pivotable relative to the substantially spherical inner surface portion of the female pipe connector so as to provide a pivotable fluidic coupling between the first and second pipe connector parts.

The ball portion may comprise a substantially planar outer surface portion which is engaged with a substantially planar inner surface portion of the socket portion of the female pipe connector, thereby substantially restricting pivoting of the male pipe connector relative to the female pipe connector to a single plane. The male pipe connector may further comprise a seal disposed on an outer surface portion of the ball portion. The pipe connector may provide a fluidic coupling between the male pipe connector and the female pipe connector throughout the pivotable extent of the pipe connector. The pipe connector may further comprise a limiter cap arranged to restrict pivoting of the male pipe connector relative to the female pipe connector to a predefined angular extent. The edges of the spherical inner surface portion of the housing may be arranged to limit the axial rotation of the first or second pipe connectors relative to the housing. The ball portion of the male pipe connector may comprise an opening arranged to provide fluidic communication between the male pipe connector and the female pipe connector, the opening being provided at an offset angle to the first connector part.

A second embodiment provides a pipe system comprising a first pipe connector according to the first embodiment, a second pipe connector according to the above embodiment, and a connecting pipe for connecting the first pipe connector and the second pipe connector. The connecting pipe may comprise a first sliding portion and a second sliding portion, the first and second sliding portions being extendable from the connecting pipe in a substantially axial direction to engage with the respective first and second pipe connector parts of the first and second pipe connectors.

A further embodiment provides a male pipe connector for use in a pipe connector according to the first embodiment.

Another embodiment provides a female pipe connector for use in a pipe connector according to the first embodiment.

### Brief Description of the Drawings

Further features and advantages of the invention will become apparent from the following description of exemplary embodiments of the invention, which are made with reference to the accompanying drawings of which:
Figure 1 is a schematic diagram of a fuel line in accordance with an embodiment of the invention;
Figure 2 is a schematic diagram of a pipe connector in accordance with an embodiment of the invention;
Figures 3A and 3B are three dimensional representations of a male pipe connector in accordance with an embodiment of the invention;
Figures 4A and 4B are three dimensional representations of a female pipe connector in accordance with an embodiment of the invention;
Figures 5A and 5B are three dimensional representations of an assembled pipe connector in accordance with an embodiment of the invention; and
Figures 6A to 6C are schematic diagrams of a pipe connector comprising a seal in accordance with embodiments of the invention;
Figures 7A to 7C are schematic diagrams of a single coupling configuration in accordance with an embodiment of the invention;
Figures 8A to 8C are schematic diagrams showing installation of a single coupling configuration in accordance with an embodiment of the invention;
Figures 9A and 9B are schematic diagrams of a pipe coupling configuration in accordance with an embodiment of the invention;
Figures 10A to 10C are schematic diagrams showing installation of a pipe coupling configuration in accordance with an embodiment of the invention;
Figures 11A and 11B are schematic diagrams of a section of a gamma coupling configuration in accordance with an embodiment of the invention; and
Figures 12A to 12C are schematic diagrams showing installation of a gamma coupling configuration in accordance with an embodiment of the invention.

Several parts and components of the described embodiments appear in more than one figure; for clarity, the same reference numeral will be used to refer to the same part and component in all of the figures.

### Detailed Description of the Invention

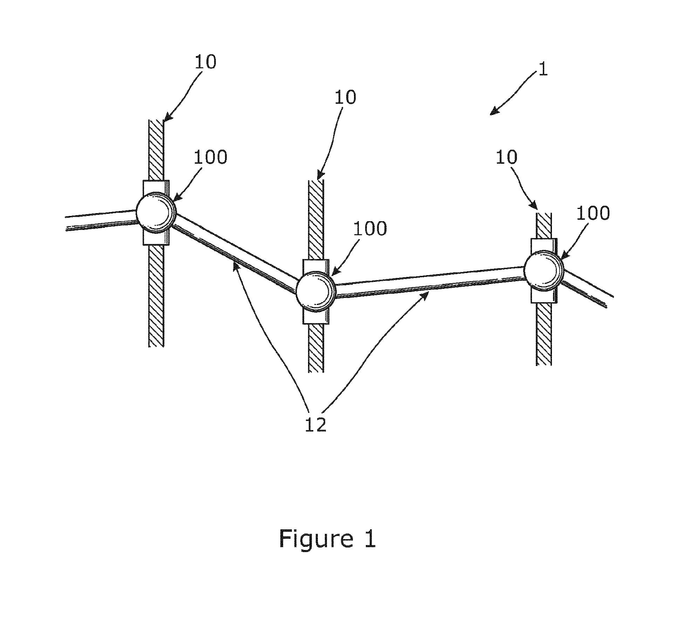

Figure 1 shows an aircraft fuel line 1 in accordance with an embodiment of the invention. The fuel line 1 comprises a plurality of pipe sections 12 which are routed through a plurality of structural members 10 within the aircraft wing or fuselage (e.g. ribs or spars). The fuel line 1 transports fuel to or from one or more fuel tanks housed in the aircraft wing or fuselage (not shown). Where the fuel line 1 intersects a structural member 10, a pipe connector 100 is provided to connect the adjacent pipe sections 12. The pipe connectors 100 provide pivoting between adjacent pipe sections 12 to enable the fuel line to be appropriately located within the aircraft wing or fuselage.

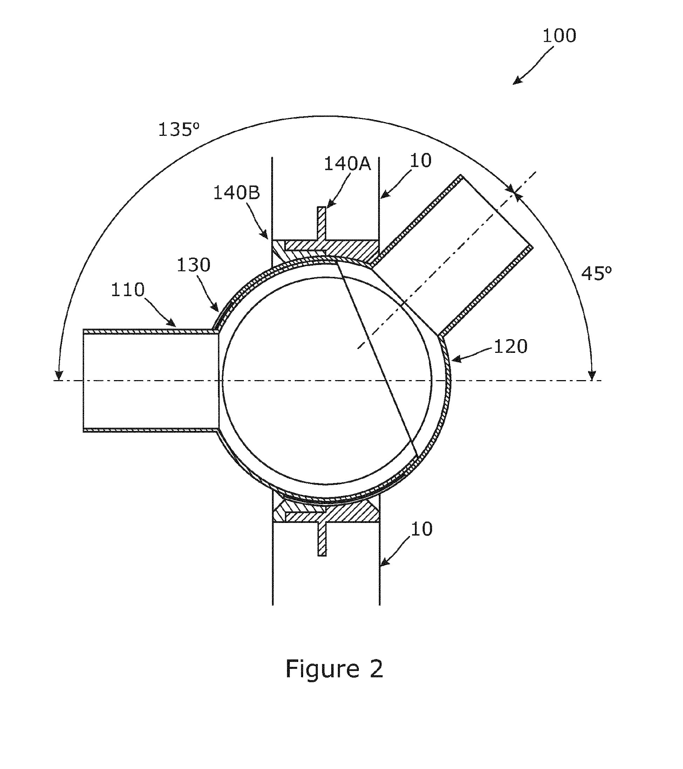

With reference to Figure 2, the pipe connector 100 comprises a male pipe connector 110, a female pipe connector 120 and a limiter cap 130. The pipe connector is pivotable within a housing 140, which is connected to the structural member 10 and comprises an outer housing 140A and an inner housing 140B. The male pipe connector 110 and the female pipe connector 120 are pivotable relative to each other to an extent that is limited by the limiter cap 130. The limiter cap 130 is bonded to the female pipe connector 120 (e.g. using glue or suitable mechanical attachment means such as fasteners, clips, snap-clip fittings etc.).

In the illustrated embodiment, the limiter cap 130 is configured to limit relative articulation of the male pipe connector 110 and the female pipe connector 120 to a 45 degree angular range (an angular range of 135 degrees to 180 degrees measured relative to the male pipe connector 110 centre axis and the female pipe connector 120 centre axis). The angular range may be controlled by appropriate configuration of the limiter cap 130 geometry.

Independent articulation of the male pipe connector 110 and the female pipe connector 120 is restricted by the geometry of the inner housing 140B and the outer housing 140A. In the illustrated embodiment, independent articulation of the male pipe connector 110 and the female pipe connector 120 is restricted to a 90 degree angular range (an angular range of +/- 45 degrees to horizontal). The angular range may be controlled by appropriate configuration of the inner housing 140B and outer housing 140A geometry.

In the embodiment shown in Figure 2, the geometry of the pipe connector 100 is selected so that the fluidic connection between the male pipe connector 110 and the female pipe connector 120 is maintained throughout the pivotable extent of the pipe connection 100. This ensures that the pipe connector 100 cannot be articulated to an angle where the fluidic connection between the male pipe connector 110 and the female pipe connector 120 is lost during use or installation. This functionality can be achieved by appropriate selection of the geometry of the male pipe connector 110, female pipe connector 120 and limiter cap 130.

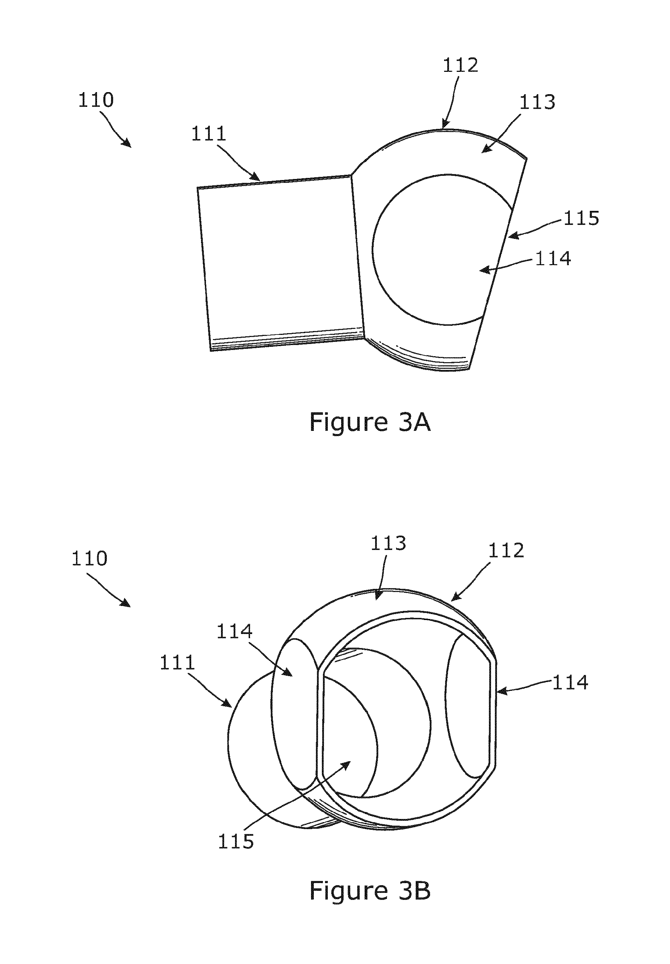

With reference to Figures 3A and 3B, the male pipe connector 110 comprises a pipe portion 111, providing a first pipe connector part, and a ball portion 112 which are in fluidic communication with each other. The ball portion 112 comprises a substantially spherical outer surface 113, two parallel planar outer surfaces 114 and a fluid opening 115. In the present embodiment, as shown in figures 3A and 3B, the fluid opening 115 is provided in the ball portion 112 at an offset angle relative to the pipe portion 111. In other words, the fluid opening 115 is provided in a non-parallel plane to the normal of the central axis of the pipe portion 111.

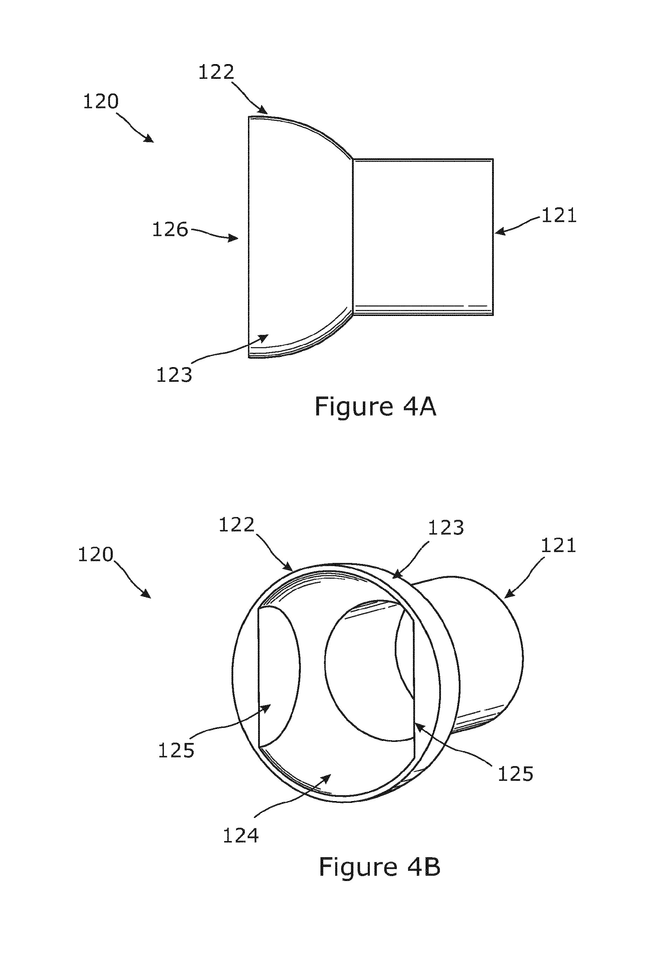

With reference to Figures 4A and 4B, the female pipe connector 120 comprises a pipe portion 121, providing a first pipe connector part, and a socket portion 122 which are in fluidic communication with each other. The socket portion 122 comprises a substantially spherical outer surface 123, a substantially spherical inner surface 124, two parallel planar inner surfaces 125 and a fluid opening 126.

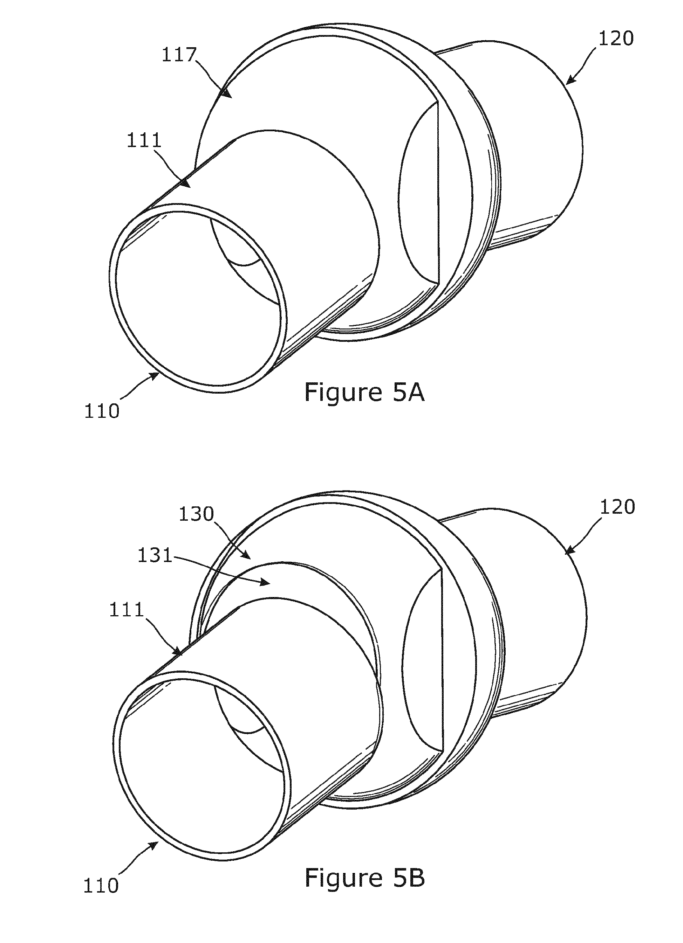

With reference to Figure 5A, the inner geometry of the socket portion 122 of the female pipe 120 (defined by surfaces 124 & 125) is complementary to the outer geometry of the ball portion 112 of the male pipe 110 (defined by surfaces 113 & 114). Thus, the ball portion 112 is pivotable within the socket portion 122 when the two portions are coupled. When coupled, the planar outer surfaces 114 of the ball portion 112 oppose the planar inner surfaces 125 of the socket portion 122 to restrict articulation between the pipe connector to a single geometric plane. Typically, a section of the surface of the ball portion 112 of the male pipe connector 110 is exposed and the exposed section 117 will vary according to the articulation of the male pipe connector 110 relative to the female pipe connector 120.

With reference to Figure 5B, the limiter cap 130 is bonded or mechanically attached to the female pipe connector 120 and covers the exposed surface 117, thus preventing separation of the ball portion 112 from the socket portion 122. The limiter cap 130 comprises an opening 131 through which the pipe portion 111 of the male pipe connector 110 extends. The size of the opening 131 is configured to restrict articulation between the male pipe connector 110 and the female pipe connector 120 to a desired angular range as discussed above.

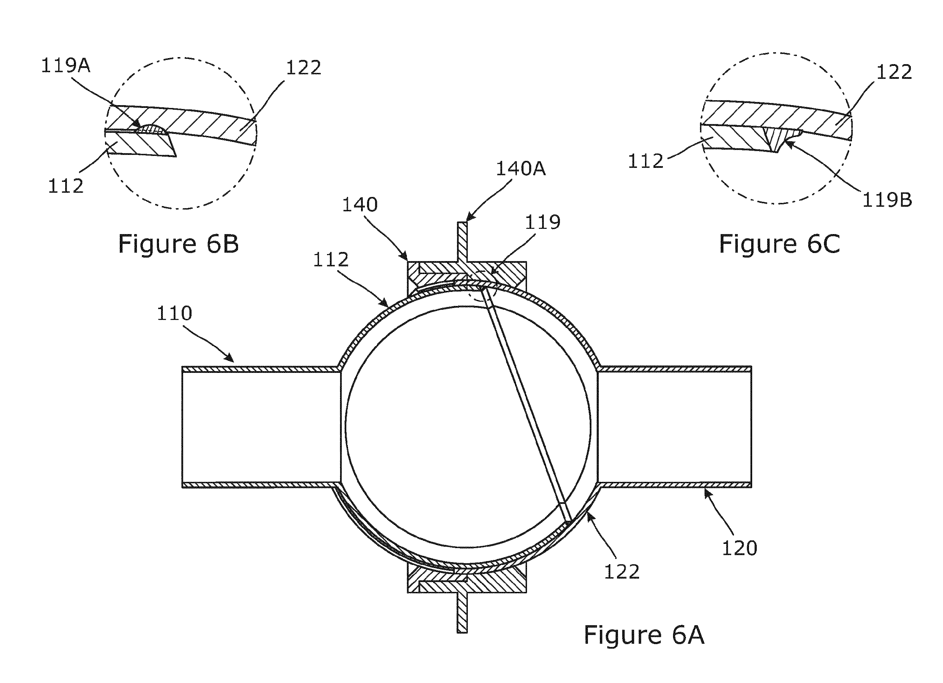

With reference to Figures 6A-6C, the male pipe connector 110 typically comprises a seal 119 to prevent fluid leakage between the ball portion 112 and the socket portion 122. Figure 6B shows an embodiment of the pipe connector 100 comprising a bead seal 119A disposed on the surface of the socket portion 112. Figure 6C shows a further embodiment of the pipe connector 100 comprising a lip seal 119B disposed on an edge of the ball portion 112 defining the fluid opening 115.

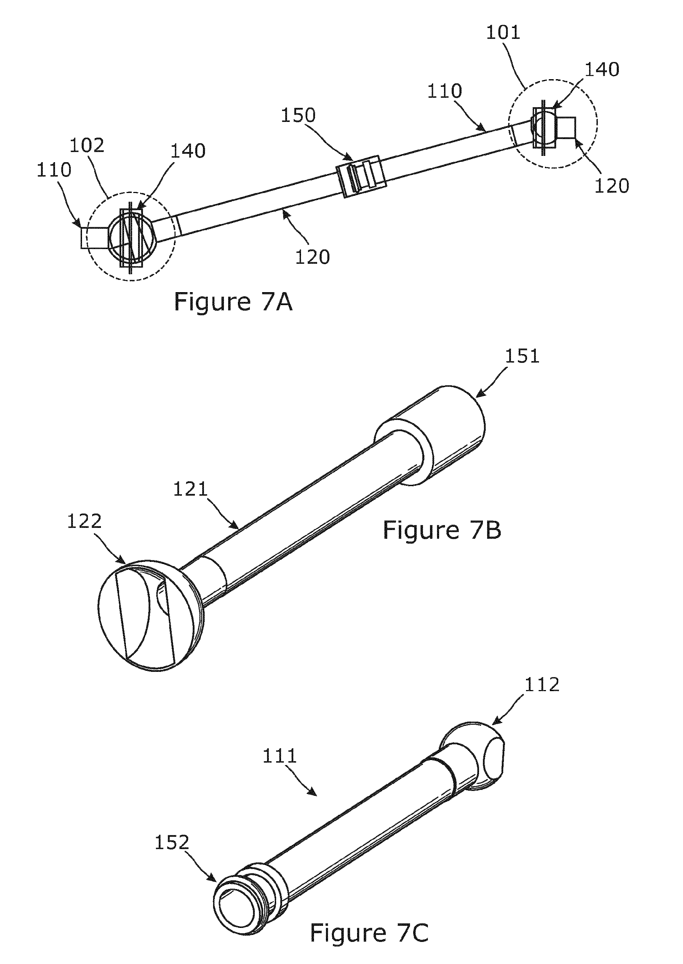

Figure 7A shows a section of a fuel line comprising a first pipe connector 101 and a second pipe connector 102 which are connected by a single coupling (hereinafter termed a "single coupling configuration"). In this embodiment, the female pipe connector 120 of the second pipe connector 102 is coupled directly to the male pipe connector 110 of first pipe connector 101 via a sliding coupling 150. With regard to Figures 7B and 7C, the sliding coupling 150 comprises a sliding portion 151 of the female pipe connector 120 which receives the pipe portion 111 of the male pipe connector 110. Disposed on the outer surface of pipe portion 111 is an O-ring 152, which seals the sliding coupling 150 to prevent fluid leakage.

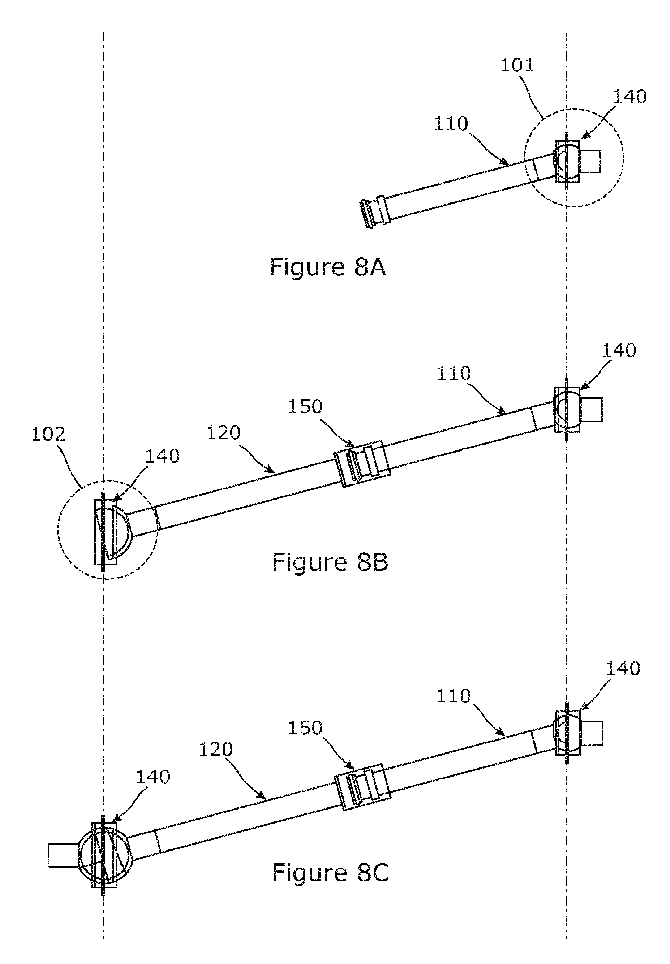

A typical procedure for assembling the single coupling configuration is shown in Figures 8A-C. Starting with the female pipe connector 120 of the first pipe connector 101 being held inside the housing 140, the male pipe connector 110 is inserted into first pipe connector 101 and the limiter cap is fitted (Figure 8A). At this stage, the outer housing 140A may be fixed onto the intended structural member 10 and the inner housing 140B is attached to the outer housing 140A, locking the ball coupling 101 together. Next, the female pipe connector 120 of the second (adjacent) pipe connector 102 is fitted and coupled to the previously fitted male pipe connection 110 via the sliding coupling 150 (Figure 8B) with the socket portion 122 of female pipe connector 120 being held inside the adjacent outer housing 140A. Next, the male pipe connector 110 for the next section of the fuel line is fitted to pipe connector 102 and the procedure can be repeated (Figure 8C).

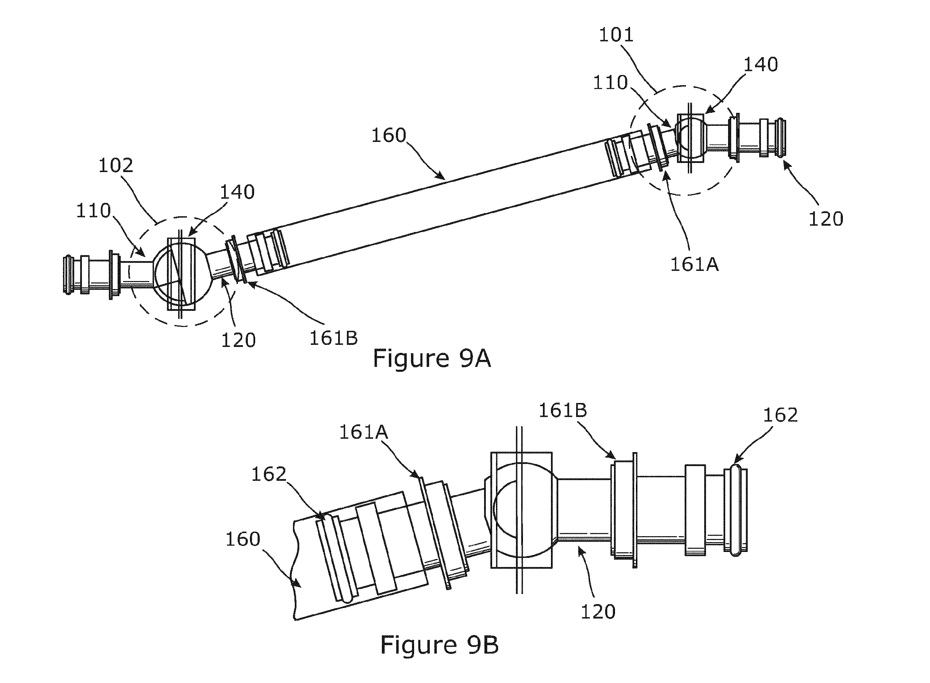

Figure 9A shows a section of a fuel line wherein adjacent ball couplings 101, 102 are coupled via a separate connecting pipe 160 (hereinafter termed a "pipe coupling configuration"). The connecting pipe 160 receives the male pipe connector 110 and female pipe connector 120 from the adjacent ball couplings 101 and 102 respectively. The connecting pipe 160 floats between adjustable stoppers 161A and 161B which extend circumferentially from the pipe portions of the male pipe connector 110 and female pipe connector 120 respectively. With regard to Figure 9B, the axial positions of the adjustable stoppers 161A, 161B are adjustable, such that the stoppers 161A, 162A can be appropriately positioned to restrict the range over which the connecting pipe 160 can float and ensure that the connecting pipe 160 cannot disengage from the pipe connectors. The adjustable stoppers 161A, 161B can be screw-fitted or clamped onto the male pipe connector 110 or the female pipe connector 120. O-rings 162 are disposed on the pipe portions 111, 121 to provide a seal between the pipe connectors 110, 120 and the connecting pipe 160.

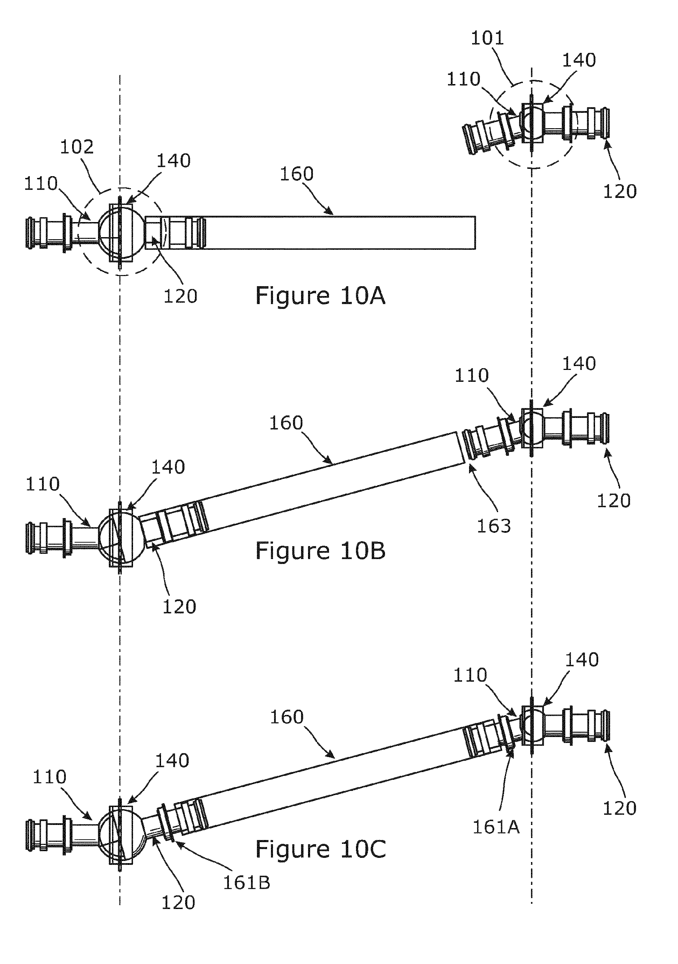

A typical procedure for assembling the pipe coupling configuration is shown in Figures 10A-C. Starting with preassembled ball couplings 101, 102, the connecting pipe 160 is engaged with the female pipe connector 120 of pipe connector 102 (Figure 10A). The female pipe connector 120 is fully received into the connecting pipe 160, thereby ensuring that the free end 163 of the connecting pipe 160 can be aligned with the male pipe connector 110 of pipe connector 101 (Figure 10B). Next, the connecting pipe 160 is engaged with the male pipe connector 110 of pipe connector 101, and the adjustable stoppers 161A, 161B are positioned and secured to prevent connecting pipe 160 from disengaging (Figure 10C).

It will be apparent that the pipe coupling configuration permits pre-installation of the pipe connectors 101, 102 into the structural members prior to fitting of the connecting pipe 160. Thus, advantageously, this configuration permits installation of each section of the fuel line independently.

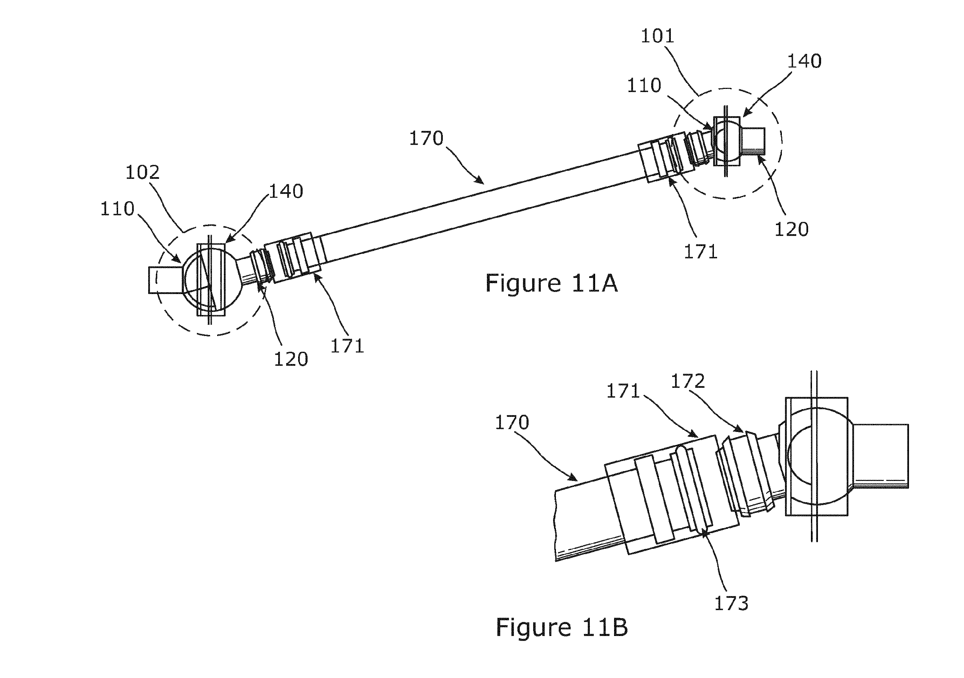

Figure 11A shows a section of a fuel line where adjacent ball couplings 101, 102 are coupled via a connecting pipe 170, which comprises sliders 171 at each end of the pipe (hereinafter termed a "gamma coupling configuration"). The connecting pipe 170 is shorter than the distance between the male pipe connector 110 and the female pipe connector 120 and the sliders 171 are provided to axially extend from the pipe 170 and engage with the pipe connectors 110, 120. With regard to Figure 11B, O-ring seals are disposed on the outer surface of the connecting pipe 170 at each end to provide a seal between the connecting pipe 170 and the sliders 171. The sliders 171 extend axially from the connecting pipe 170 to engage with the pipe connectors. A clamp 172 is provided on surface of the pipe portion of the pipe connectors 110, 120 to engage with the sliders 171 and ensure a secure connection.

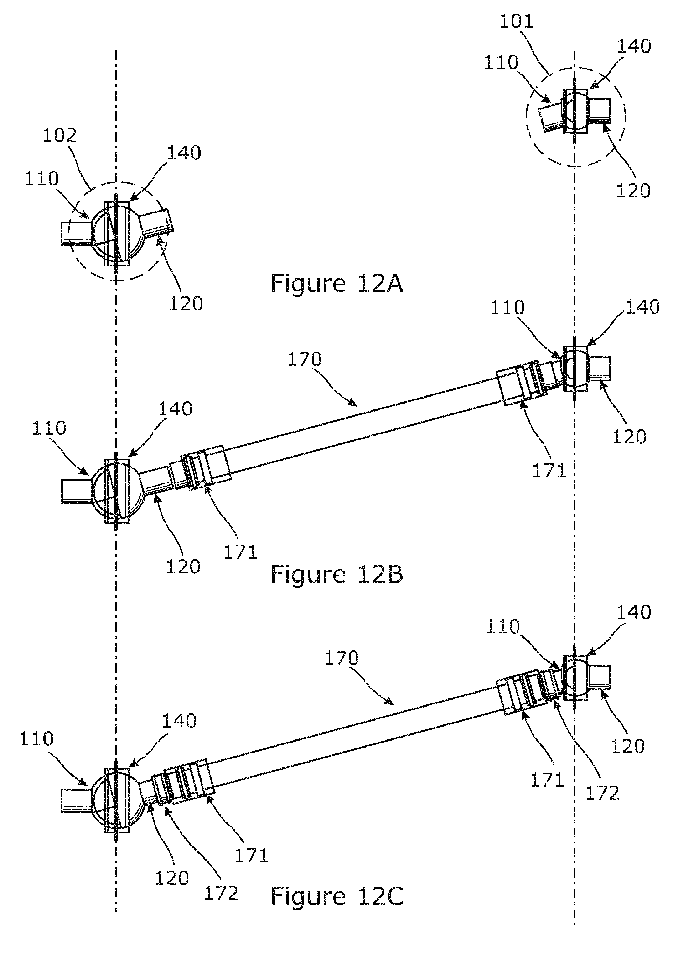

A typical procedure for assembling the gamma coupling configuration is shown in Figures 12A-C. Starting with preassembled ball couplings 101, 102 (Figure 12A), the connecting pipe 170 is positioned between and aligned with the male pipe connector 110 of pipe connector 101 and the female pipe connector 120 of pipe connector 102 (Figure 12B). Next, the sliders 171 are extended to engage with the male pipe connector 110 of pipe connector 101 and the female pipe connector 120 of pipe connector 102, and the clamps 172 are engaged to ensure a secure connection (Figure 12C).

In common with the pipe coupling configuration, it will be appreciated that the gamma coupling configuration also permits pre-installation of the pipe connectors 101, 102 into the structural members 10 prior to fitting of the connecting pipe 170. Thus, advantageously, this configuration also permits installation of each section of the fuel line independently.

Embodiments of the pipe connector 100 are typically manufactured from a polymer or fibre reinforced polymer such as thermoplastic polyether ether ketone (PEEK) with short strand carbon fibre. Alternatively, the male pipe connector 110 and the female pipe connector 120 may be machined from a suitable metal or alloy and the connecting pipes may be manufactured from a suitable glass reinforced polymer.

In the embodiments described above, articulation of the male pipe connector 110 and female pipe connector 120 is restricted to a single geometric plane by virtue of planar surfaces 114 and 125. This restriction is compensated by the ability for the female pipe connector 120 to rotate 360 degrees about the housing bore axis, enabling the pivoting plane of the male pipe connector 110 to be adjusted for the purpose of installation in any rotation direction. However, it will be appreciated that further embodiments without this restriction are envisaged.

In some embodiments, a fuel line may comprise one or more floating pipe connectors which are not secured within a structural member 10. Such floating pipe connectors are advantageous where it is necessary to route the fuel line around an obstacle, but where it is not possible to provide a housing (e.g. due to the absence of a suitably positioned structural member 10). In such embodiments, restricting relative pivoting of the male and female pipe connectors of the floating pipe connector to a single plane (e.g. by virtue of planar surfaces 114 and 125) is preferred in order to minimise movement of the floating section of fuel line relative to adjacent pipe connectors. Further, restricting relative pivoting of the floating pipe connector in this manner reduces the stresses experienced by adjacent pipe connectors. In effect, planar surfaces 114 and 125 enable the pipe connector to resist forces, to a certain extent, out of the plane of pivoting.

The above embodiments are to be understood as illustrative examples of the invention and further embodiments envisaged. For example, the housing 140 may be an integral feature of the structural member 10 to thereby reduce component count and expense. Moreover, whilst the above embodiments relate to an aircraft fuel line, it will be appreciated that embodiments of the invention may also be employed in aircraft venting systems. Indeed, it will be appreciated that further embodiments of the invention may find application in any field where fluid transportation is required. For example, embodiments of the invention may find application in building ventilation systems, agricultural machinery or household appliances.

Finally, it is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A pipe connector for providing a fluidic coupling between two pipes, said pipe connector comprising:
a male pipe connector comprising a first pipe connector part for a first pipe at one end and a ball portion at the other end providing a substantially spherical outer surface portion;
a female pipe connector comprising a second pipe connector part for a second pipe at one end and a socket portion at the other end providing a substantially spherical inner surface portion and a substantially spherical outer surface portion; and
a housing comprising a substantially spherical inner surface portion, wherein said outer surface portion of said female pipe connector is engaged with said substantially spherical inner surface portion and pivotable relative to said housing and said outer surface portion of said male pipe connector is engaged with and pivotable relative to said substantially spherical inner surface portion of said female pipe connector so as to provide a pivotable fluidic coupling between said first and second pipe connector parts.

2. A pipe connector according to claim 1, wherein said ball portion comprises a substantially planar outer surface portion which is engaged with a substantially planar inner surface portion of said socket portion of said female pipe connector, thereby substantially restricting pivoting of said male pipe connector relative to said female pipe connector to a single plane.

3. A pipe connector according to any one of the preceding claims, wherein said male pipe connector further comprises a seal disposed on an outer surface portion of said ball portion.

4. A pipe connector according to any one of the preceding claims, wherein said pipe connector provides a fluidic coupling between said male pipe connector and said female pipe connector throughout the pivotable extent of said pipe connector.

5. A pipe connector according to any one of the preceding claims, wherein said pipe connector further comprises a limiter cap arranged to restrict pivoting of said male pipe connector relative to said female pipe connector to a predefined angular extent.

6. A pipe connector according to any one of the preceding claims in which the edges of said spherical inner surface portion of said housing are arranged to limit the axial rotation of said first or second pipe connectors relative to said housing.

7. A pipe connector according to any one of the preceding claims in which said ball portion of said male pipe connector comprises an opening arranged to provide fluidic communication between said male pipe connector and said female pipe connector, said opening being provided at an offset angle to said first connector part.

8. A pipe system comprising a first pipe connector according to any one of claims 1 to 7, a second pipe connector according to any one of claims 1 to 7, and a connecting pipe for connecting the first pipe connector and the second pipe connector.

9. A pipe system according to claim 8, wherein the connecting pipe comprises a first sliding portion and a second sliding portion, the first and second sliding portions being extendable from the connecting pipe in a substantially axial direction to engage with the respective first and second pipe connector parts of said first and second pipe connectors.

10. A male pipe connector for use in a pipe connector according to any one of claims 1 to 7.

11. A female pipe connector for use in a pipe connector according to any one of claims 1 to 7.

12. A male pipe connector substantially as hereinbefore described with reference to the figures.

13. A female pipe connector substantially as hereinbefore described with reference to the figures.

14. A pipe connector substantially as hereinbefore described with reference to the figures.
